# EUROPEAN PATENT SPECIFICATION

(11) **EP 1 811 631 B1**
(45) Date of publication and mention of the grant of the patent: **19.12.2012**
(21) Application number: 07100747.0
(22) Date of filing: 18.01.2007
(51) Int. Cl.: H02K 1/27

(54) **Surface permanent magnet type rotating electric machine and manufacturing method thereof**
Elektrische Rotationsmaschine mit oberflächig montierten Permanentmagneten und Herstellungsverfahren dafür
Machine électrique tournante avec aimants surfaciques et méthode de fabrication de celle-ci

(30) Priority: 20.01.2006 JP 2006012243
(43) Date of publication of application: 25.07.2007
(73) Proprietor: Toyota Jidosha Kabushiki Kaisha, Toyota-shi, Aichi-ken, 471-8571 (JP)
(72) Inventor: Maeda, Tomoyuki, Toyota-shi Aichi 471-8571 (JP); Iida, Tatsuo, Toyota-shi Aichi 471-8571 (JP)
(74) Representative: TBK

(56) References cited:
- JP-A- 3 011 948
- JP-A- 9 322 450
- JP-A- 10 210 692
- US-A1- 2003 193 258

## Description

### Field of the Invention

The present invention relates to a surface permanent magnet type rotating electric machine and a manufacturing method thereof, and more particularly to a surface permanent magnet type rotating electric machine having a scattering-prevention tube for suppressing scattering of a magnet arranged in a rotor and a manufacturing method thereof.

### Description of the Background Art

For example, Japanese Patent Laying-Open No. 2001-169487 (Patent Document 1) discloses suppression of eddy current loss by dividing a scattering-prevention tube in a plurality of pieces in an axial direction to obtain a plurality of holding rings, in a motor provided with the scattering-prevention tube made of titanium around an outer circumference of a permanent magnet included in a rotor.

In addition, Japanese National Patent Publication No. 2001-513315 (Patent Document 2) discloses use of a titanium tube of high-strength as a tubular member provided around an outer circumference of a magnet of a rotor.

Moreover, Japanese Patent Laying-Open No. 05-239507 (Patent Document 3) discloses a high-strength titanium-based composite material in which TiB is dispersed.

Further, Japanese Patent Laying-Open No. 2000-060042 (Patent Document 4) discloses lowering of eddy current loss by providing a slit in a metal cover provided around an outer circumference of a permanent magnet.

In addition, Japanese Patent Laying-Open No. 05-005138 (Patent Document 5) discloses a titanium alloy composite material containing SiC particles.

In addition, Japanese Utility-Model Laying-Open No. 07-020048 (Patent Document 6), Japanese Utility-Model Laying-Open No. 07-020049 (Patent Document 7), Japanese Utility-Model Laying-Open No. 07-020051 (Patent Document 8), and Japanese Patent Laying-Open No. 10-225032 (Patent Document 9) disclose a rotor formed by providing a tubular member around a magnet.

Moreover, Japanese Patent Laying-Open No. 2002-303257 (Patent Document 10) discloses improvement in centrifugal fracture strength for withstanding ultrafast rotation, by covering a hollow rotation shaft made of metal with a hollow cylinder made of a composite material having high elasticity and high tensile strength.

Further, Japanese Patent Laying-Open No. 2004-180349 (Patent Document 11) discloses a rotor formed by alternately layering a plurality of permanent magnets and a plurality of insulating materials in a direction of an axis of a rotation shaft.

A tube for preventing the magnet from scattering is required to have high rigidity, low specific gravity, non-magnetic characteristic, and high specific resistance. If a motor is driven in high-speed rotation, magnetic field is switched at high frequency and eddy current is generated. Here, if the scattering-prevention tube has low specific resistance, the eddy current becomes greater and an amount of heat generation is increased, which results in increase in loss caused by heat.

On the other hand, if the scattering-prevention tube is made from carbon fibers, the requirements above are met to some extent, however, the cost increases. Meanwhile, if the scattering-prevention tube is made from a single type of metal, the requirements above cannot necessarily sufficiently be met.

In addition, if the scattering-prevention tube is divided into a plurality of holding rings as described in Patent Document 1, the assembly step becomes complicated.

The requirements above cannot necessarily sufficiently be met either, with the structure described in Patent Documents 2 to 11.

### SUMMARY OF THE INVENTION

An object of the present invention is to provide a surface permanent magnet type rotating electric machine achieving suppressed eddy current loss while suppressing a complicated assembly step, and a manufacturing method thereof

A surface permanent magnet type rotating electric machine according to the present invention, in one aspect, includes a rotor. The rotor includes a magnet and a scattering-prevention tube provided around an outer circumference of the magnet and suppressing scattering of the magnet. The scattering-prevention tube is formed by sintering a composite material including a basis containing a non-magnetic high-strength material and particles having specific resistance higher than that of the basis containing the high-strength material.

According to the structure above, the scattering-prevention tube having high specific resistance is formed and eddy current loss is suppressed. In addition, as higher specific resistance can be achieved without dividing the scattering-prevention tube, a complicated assembly operation of the scattering-prevention tube can be suppressed.

A surface permanent magnet type rotating electric machine according to the present invention, in another aspect, includes a rotor. The rotor includes a magnet and a scattering-prevention tube provided around an outer circumference of the magnet and suppressing scattering of the magnet. The scattering-prevention tube is formed by sintering a composite material obtained by layering, alternately in an axial direction, a layer containing a non-magnetic high-strength material and a layer having specific resistance higher than that of the layer containing the high-strength material.

According to the structure above, as a flow path of an eddy current can be divided at the layer having high specific resistance, eddy current loss can be suppressed. In addition, as the flow path of the eddy current can be divided without dividing the scattering-prevention tube, a complicated assembly operation of the scattering-prevention tube can be suppressed.

A method of manufacturing a surface permanent magnet type rotating electric machine according to the present invention, in one aspect, includes the steps of: forming a composite material by mixing a basis containing a non-magnetic high-strength material and particles having specific resistance higher than that of the basis containing the high-strength material; forming a scattering-prevention tube by sintering the composite material; and forming a rotor by inserting a magnet in the scattering-prevention tube.

According to the method above, the scattering-prevention tube having high specific resistance is formed and eddy current loss is suppressed. In addition, as higher specific resistance can be achieved without dividing the scattering-prevention tube, a complicated assembly operation of the scattering-prevention tube can be suppressed.

A method of manufacturing a surface permanent magnet type rotating electric machine according to the present invention, in another aspect, includes the steps of: forming a composite material by alternately layering a layer containing a non-magnetic high-strength material and a layer having specific resistance higher than that of the layer containing the high-strength material; forming a scattering-prevention tube by sintering the composite material; and forming a rotor by inserting a magnet in the scattering-prevention tube.

According to the method above, as a flow path of an eddy current can be divided at the layer having high specific resistance, eddy current loss can be suppressed. In addition, as the flow path of the eddy current can be divided without dividing the scattering-prevention tube, a complicated assembly operation of the scattering-prevention tube can be suppressed.

In the surface permanent magnet type rotating electric machine and the method of manufacturing a surface permanent magnet type rotating electric machine above, for example, the basis containing the non-magnetic high-strength material is titanium, and the layer containing the non-magnetic high-strength material is a titanium layer.

According to the present invention, as described above, a surface permanent magnet type rotating electric machine achieving suppressed eddy current loss while suppressing a complicated assembly step, and a manufacturing method thereof can be obtained.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a cross-sectional view of a surface permanent magnet type rotating electric machine according to one embodiment of the present invention.
Fig. 2 is a cross-sectional view of a rotor in the surface permanent magnet type rotating electric machine according to one embodiment of the present invention.
Fig. 3 is a cross-sectional view of a rotor in a variation of the surface permanent magnet type rotating electric machine according to one embodiment of the present invention.
Fig. 4 illustrates a manufacturing process of a scattering-prevention tube in the surface permanent magnet type rotating electric machine according to one embodiment of the present invention.
Fig. 5 illustrates a manufacturing process of a scattering-prevention tube in the variation of the surface permanent magnet type rotating electric machine according to one embodiment of the present invention.

### DESCRIPTION OF THE PREFERRED EMBODIMENTS

An embodiment of a surface permanent magnet type rotating electric machine and a manufacturing method thereof according to the present invention will be described hereinafter. The same or corresponding elements have the same reference characters allotted and detailed description thereof will not be repeated.

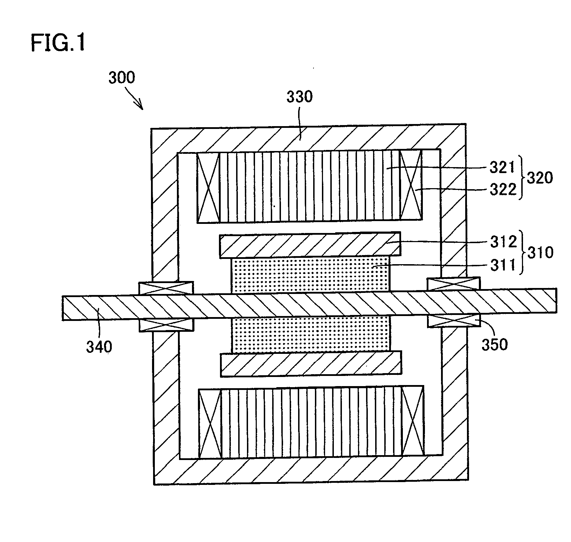

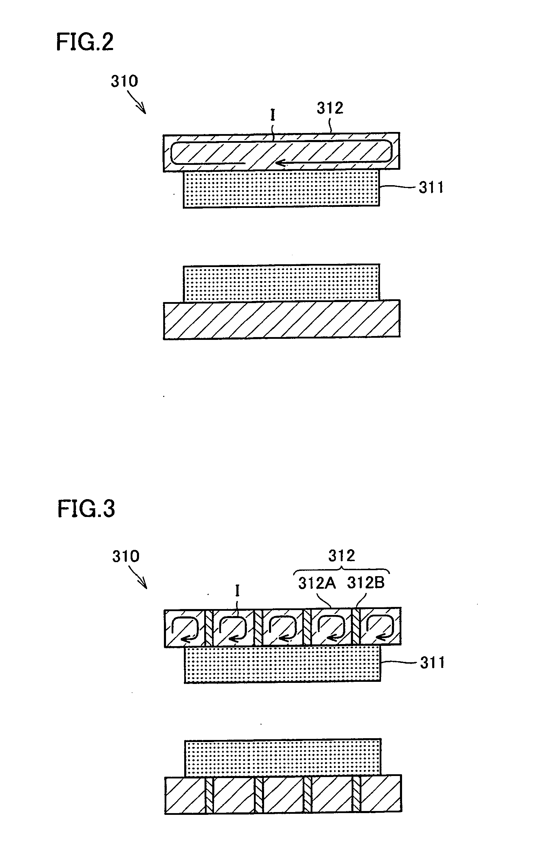

Fig. 1 is a cross-sectional view of a surface permanent magnet type rotating electric machine according to one embodiment of the present invention. Fig. 2 is a cross-sectional view of a rotor in the surface permanent magnet type rotating electric machine according to the present embodiment. Referring to Fig. 1, a surface permanent magnet type motor 300 according to the present embodiment includes a rotor 310, a stator 320, a housing 330, a rotation shaft 340, and a bearing 350. Rotor 310 and stator 320 are provided in housing 330. Rotor 310 is provided and fixed on rotation shaft 340. Rotation shaft 340 is supported by bearing 350 in a manner rotatable with respect to housing 330.

As shown in Figs. 1 and 2, rotor 310 includes a magnet 311 and a scattering-prevention tube 312 provided on an outer circumferential side of magnet 311. Scattering-prevention tube 312 is a tubular member for preventing breakage or scattering of magnet 311. As described above, surface permanent magnet type motor 300 representing the "surface permanent magnet type rotating electric machine" is a motor having rotor 310 in which magnet 311 is arranged around an outer circumferential surface of rotation shaft 340.

Stator 320 includes a ring-shaped stator core 321 and a stator coil 322 wound around stator core 321. Stator core 321 is formed, for example, by layering plate-shaped magnetic elements made from iron, iron alloy, or the like.

When rotor 310 rotates at high speed (for example, at approximately 200,000 rpm), centrifugal force applied to magnet 311 located in the vicinity of a side surface of the rotor (for example, having a diameter of approximately 20mm) becomes greater. Therefore, the following characteristics are required in scattering-prevention tube 312:
1. High-rigidity; for ensuring strength for withstanding centrifugal force;
2. Low specific gravity; if specific gravity is high, the scattering-prevention tube itself is expanded due to centrifugal force and magnet fastening property is lowered;
3. Non-magnetic characteristic; the scattering-prevention tube is present in a gap portion between the magnet and the core; and
4. High specific resistance; for lowering eddy current loss.

If rotor 310 rotates at high speed, the magnetic field is switched at high frequency and eddy current I is generated in scattering-prevention tube 312 as shown in Fig. 2. If the eddy current becomes greater, heat is generated, which affects drive power of the motor. Therefore, scattering-prevention tube 312 preferably has a high specific resistance characteristic.

In surface permanent magnet type motor 300 according to the present embodiment, scattering-prevention tube 312 constituting rotor 310 is formed by sintering a composite material containing titanium serving as the "basis containing the non-magnetic high-strength material" and particles having specific resistance higher than that of titanium. By thus forming scattering-prevention tube 312, as compared with scattering-prevention tube 312 formed from titanium alone, scattering-prevention tube 312 can have higher specific resistance, and therefore increase in the eddy current generated in scattering-prevention tube 312 can be suppressed. Consequently, heat generation is suppressed and loss caused by heat is reduced. As a result, surface permanent magnet type motor 300 adapted to high rotational speed can be obtained.

For example, silicon particles or the like may be used as the "particles having specific resistance higher than that of titanium." In addition, a titanium alloy or a nickel alloy may be used as the "basis containing the high-strength material."

Fig. 3 is a cross-sectional view of rotor 310 in a variation of surface permanent magnet type motor 300 according to the present embodiment. Referring to Fig. 3, in this variation as well, rotor 310 includes magnet 311 and scattering-prevention tube 312 provided on the outer circumferential side of magnet 311.

In surface permanent magnet type motor 300 according to this variation, scattering-prevention tube 312 constituting rotor 310 is formed by sintering a composite material obtained by layering, alternately in an axial direction, a first portion 312A which is a titanium layer (layer containing the non-magnetic high-strength material) and a second portion 312B which is a layer having specific resistance higher than that of the titanium layer. By thus forming scattering-prevention tube 312, as compared with scattering-prevention tube 312 formed from titanium alone, a flow path of eddy current I can be divided at second portion 312B, and therefore increase in the eddy current generated in scattering-prevention tube 312 can be suppressed. Consequently, heat generation is suppressed and loss caused by heat is reduced. Surface permanent magnet type motor 300 adapted to high rotational speed can thus be obtained.

For example, a layer containing silicon particles or the like may be used as the "layer having specific resistance higher than that of the titanium layer." In addition, a titanium alloy layer or a nickel alloy layer may be used as the "layer containing the high-strength material."

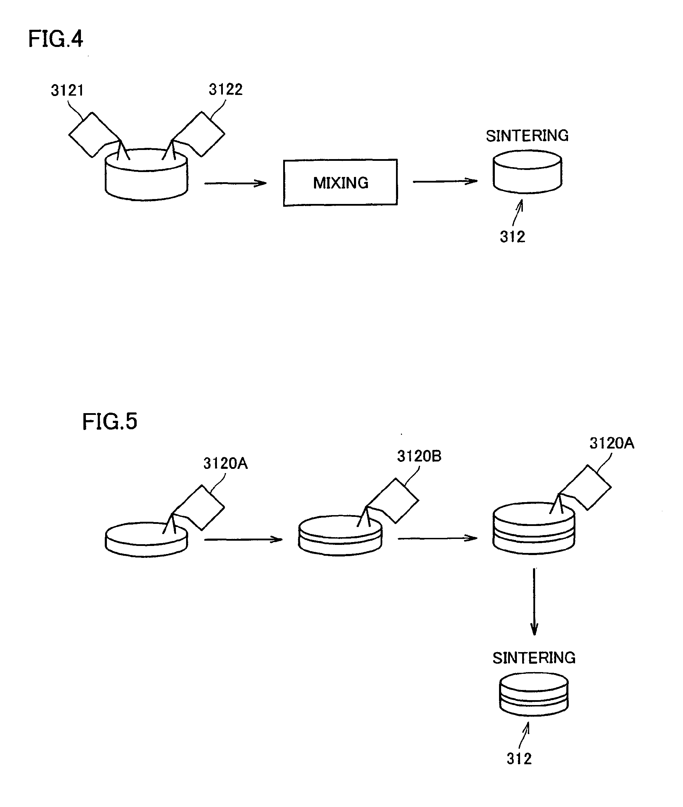

A manufacturing process of rotor 310 described above will now be described. Fig. 4 is a diagram illustrating a manufacturing process of scattering-prevention tube 312 shown in Fig. 2, while Fig. 5 is a diagram illustrating a manufacturing process of the scattering-prevention tube 312 shown in Fig. 3.

Referring to Fig. 4, titanium particles 3121 and silicon particles 3122 are poured into the same container, followed by mixing. Thereafter, sintering is performed, thereby obtaining scattering-prevention tube 312 containing silicon particles that are particles having specific resistance higher than that of titanium.

Namely, the method of manufacturing surface permanent magnet type motor 300 shown in Fig. 2 includes the steps of forming the composite material by mixing titanium particles 3121 serving as the "basis containing the non-magnetic high-strength material" and silicon particles 3122 having specific resistance higher than that of titanium; forming scattering-prevention tube 312 by sintering the composite material (refer to Fig. 4 for these two steps); and forming rotor 310 by inserting magnet 311 in scattering-prevention tube 312 (Fig. 2).

Referring to Fig. 5, titanium particles 3120A are poured in the container and silicon particles 3120B are additionally poured. Further, titanium particles 3120A are additionally poured, thereby forming a layered structure of titanium particles 3120A and silicon particles 3120B. By performing sintering in this state, scattering-prevention tube 312 having a layered structure of first and second portions 312A and 312B can be obtained.

Namely, the method of manufacturing surface permanent magnet type motor 300 shown in Fig. 3 includes the steps of: forming the composite material by alternately layering the layer of titanium particles 3120A (layer containing the non-magnetic high-strength material) and the layer containing silicon particles 3120B having specific resistance higher than that of titanium particles 3120A; forming scattering-prevention tube 312 by sintering the composite material (refer to Fig. 5 for these two steps); and forming rotor 310 by inserting magnet 311 in scattering-prevention tube 312 (Fig. 3).

According to the surface permanent magnet type rotating electric machine and the manufacturing method thereof in the present embodiment, eddy current loss is suppressed as described above. In addition, as the eddy current loss can be suppressed without dividing the scattering-prevention tube, the complicated assembly operation of the scattering-prevention tube can be suppressed.

Although the present invention has been described and illustrated in detail, it is clearly understood that the same is by way of illustration and example only and is not to be taken by way of limitation, the spirit and scope of the present invention being limited only by the terms of the appended claims.

A surface permanent magnet type rotating electric machine includes a rotor (310). The rotor (310) has a magnet (311) and a scattering-prevention tube (312) provided around an outer circumference of the magnet (311) and suppressing scattering of the magnet (311). The scattering-prevention tube (312) is formed by sintering a titanium composite material obtained by layering, alternately in an axial direction, a first portion (312A) which is a titanium layer and a second portion (312B) having specific resistance higher than that of the first portion (312A).

## Claims

1. A surface permanent magnet type rotating electric machine comprising a rotor (310);
said rotor (310) including a magnet (311) and a scattering-prevention tube (312) provided around an outer circumference of said magnet (311) and suppressing scattering of said magnet (311), and
said scattering-prevention tube (312) being formed by sintering a composite material including a basis (3121) containing a non-magnetic high-strength material and particles (3122) having specific resistance higher than that of said basis (3121) containing the high-strength material.

2. The surface permanent magnet type rotating electric machine according to claim 1, wherein
said basis (3121) containing said high-strength material is titanium.

3. A surface permanent magnet type rotating electric machine comprising a rotor (310);
said rotor (310) including a magnet (311) and a scattering-prevention tube (312) provided around an outer circumference of said magnet (311) and suppressing scattering of said magnet (311), and
said scattering-prevention tube (312) being formed by sintering a composite material obtained by layering, alternately in an axial direction, a layer (312A) containing a non-magnetic high-strength material (3120A) and a layer (312B) having specific resistance higher than that of the layer (312A) containing the high-strength material (3120A).

4. The surface permanent magnet type rotating electric machine according to claim 3, wherein
said layer (312A) containing said high-strength material (3120A) is a titanium layer.

5. A method of manufacturing a surface permanent magnet type rotating electric machine, comprising the steps of:
forming a composite material by mixing a basis (3121) containing a non-magnetic high-strength material and particles (3122) having specific resistance higher than that of said basis (3121) containing the high-strength material;
forming a scattering-prevention tube (312) by sintering said composite material; and
forming a rotor (310) by inserting a magnet (311) in said scattering-prevention tube (312).

6. The method of manufacturing a surface permanent magnet type rotating electric machine according to claim 5, wherein
said basis (3121) containing said high-strength material is titanium.

7. A method of manufacturing a surface permanent magnet type rotating electric machine, comprising the steps of:
forming a composite material by alternately layering a layer (312A) containing a non-magnetic high-strength material (3120A) and a layer (312B) having specific resistance higher than that of the layer (312A) containing the high-strength material (3120A);
forming a scattering-prevention tube (312) by sintering said composite material; and
forming a rotor (310) by inserting a magnet (311) in said scattering-prevention tube (312).

8. The method of manufacturing a surface permanent magnet type rotating electric machine according to claim 7, wherein
said layer (312A) containing said high-strength material (3120A) is a titanium layer.

## Patentansprüche

1. Rotierende elektrische Maschine der Oberflächen-Permanentmagnet-Bauart mit einem Rotor (310);
wobei der Rotor (310) einen Magneten (311) und ein um einen Außenrand des Magneten (311) angebrachtes und ein Auseinanderstieben des Magneten (311) unterdrückendes Auseinanderstieben-Verhinderungsrohr (312) umfasst, und
wobei das Auseinanderstieben-Verhinderungsrohr (312) durch Sintern eines Verbundmaterials gebildet ist, das eine Basis (3121) enthält, die ein nichtmagnetisches hochfestes Material sowie Partikel (3122) enthält, die einen spezifischen Widerstand größer als den der Basis (3121) haben, die das hochfeste Material enthält.

2. Rotierende elektrische Maschine der Oberflächen-Permanentmagnet-Bauart nach Anspruch 1, wobei es sich bei der Basis (3121), die das hochfeste Material enthält, um Titan handelt.

3. Rotierende elektrische Maschine der Oberflächen-Permanentmagnet-Bauart mit einem Rotor (310),
wobei der Rotor (310) einen Magneten (311) und ein um den Außenrand des Magneten (311) angebrachtes und ein Auseinanderstieben des Magneten (311) unterdrückendes Auseinanderstieben-Verhinderungsrohr (312) umfasst, und
wobei das Auseinanderstieben-Verhinderungsrohr (312) durch Sintern eines Verbundmaterials gebildet ist, welches erhalten wurde durch abwechselndes Schichten einer axialen Richtung einer ein nichtmagnetisches hochfestes Material (3120A) enthaltenden Schicht (312A) und einer Schicht (312B), die einen spezifischen Widerstand hat, der größer ist als der der Schicht (312A), die das hochfeste Material (3120A) enthält.

4. Rotierende elektrische Maschine der Ooberflächen-Permanentmagnet-Bauart nach Anspruch 3, wobei
die das hochfeste Material (3120A) enthaltende Schicht (312A) eine Titanschicht ist.

5. Verfahren zum Herstellen einer rotierenden elektrischen Maschine der Oberflächen-Permanentmagnet-Bauart, mit den Schritten:
Ausbilden eines Verbundmaterials durch Mischen einer ein nichtmagnetisches hochfestes Material enthaltenden Basis (3121) mit Partikeln (3122), die einen spezifischen Widerstand größer als den der Basis (3121) haben, die das hochfeste Material enthält;
Ausbilden eines Auseinanderstieben-Verhinderungsrohrs (312) durch Sintern des Verbundematerials; und
Ausbilden eines Rotors (310) durch Einsetzen eines Magneten (311) in das Auseinanderstieben-Verhinderungsrohr (312).

6. Verfahren zum Herstellen einer rotierenden elektrischen Maschine der Oberflächen-Permanentmagnet-Bauart nach Anspruch 5, wobei
es sich bei der Basis (3121), die das hochfeste Material enthält, um Titan handelt.

7. Verfahren zum Herstellen einer rotierenden elektrischen Maschine der Oberflächen-Permanentmagnet-Bauart, mit den Schritten:
Ausbilden eines Verbundmaterials durch abwechselndes Schichten einer ein nichtmagnetisches hochfestes Material (3120A) enthaltenden Schicht (312A) und einer Schicht (312B), die einen spezifischen Widerstand größer als den der Basis (3121) hat, die das hochfeste Material enthält;
Ausbilden eines Auseinanderstieben-Verhinderungsrohrs (312) durch Sintern des Verbundmaterials; und
Ausbilden eines Rotors (310) durch Einsetzen eines Magneten (311) in das Auseinanderstieben-Verhinderungsrohr (312).

8. Verfahren zum Herstellen einer rotierenden elektrischen Maschine der Oberflächen-Permanentmagnet-Bauart nach Anspruch 7, **dadurch gekennzeichnet, dass**
die das hochfeste Material (3120A) enthaltende Schicht (312A) eine Titanschicht ist.

## Revendications

1. Machine électrique rotative de type à aimant permanent de surface comprenant un rotor (310) ;
ledit rotor (310) comprenant un aimant (311) et un tube anti-diffusion (312) prévu autour d'une circonférence externe dudit aimant (311) et supprimant la diffusion dudit aimant (311), et
ledit tube anti-diffusion (312) étant formé en frittant un matériau composite comprenant une base (3121) contenant un matériau à haute résistance non magnétique et des particules (3122) ayant une résistance spécifique supérieure à celle de ladite base (3121) contenant le matériau à haute résistance.

2. Machine électrique rotative de type à aimant permanent de surface selon la revendication 1, dans laquelle
ladite base (3121) contenant ledit matériau à haute résistance est du titane.

3. Machine électrique rotative de type à aimant permanent de surface comprenant un rotor (310) ;
ledit rotor (310) comprenant un aimant (311) et un tube anti-diffusion (312) prévu autour d'une circonférence externe dudit aimant (311) et supprimant la diffusion dudit aimant (311), et
ledit tube anti-diffusion (312) étant formé en frittant un matériau composite obtenu en déposant en couche, de manière alternée dans une direction axiale, une couche (312A) contenant un matériau à haute résistance non magnétique (3120A) et une couche (312B) ayant une résistance spécifique supérieure à celle de la couche (312A) contenant le matériau à haute résistance (3120A).

4. Machine électrique rotative de type à aimant permanent de surface selon la revendication 3, dans laquelle
ladite couche (312A) contenant ledit matériau à haute résistance (3120A) est une couche de titane.

5. Procédé pour fabriquer une machine électrique rotative de type à aimant permanent de surface, comprenant les étapes consistant à :
former un matériau composite en mélangeant une base (3121) contenant un matériau à haute résistance non magnétique et des particules (3122) ayant une résistance spécifique supérieure à celle de ladite base (3121) contenant le matériau à haute résistance ;
former un tube anti-diffusion (312) en frittant ledit matériau composite ; et
former un rotor (310) en insérant un aimant (311) dans ledit tube anti-diffusion (312).

6. Procédé pour fabriquer une machine électrique rotative de type à aimant permanent de surface selon la revendication 5, dans lequel
ladite base (3121) contenant ledit matériau à haute résistance est du titane.

7. Procédé pour fabriquer une machine électrique rotative de type à aimant permanent de surface, comprenant les étapes consistant à :
former un matériau composite en déposant en couche, de manière alternée, une couche (312A) contenant un matériau à haute résistance non magnétique (3120A) et une couche (312B) ayant une résistance spécifique supérieure à celle de la couche (312A) contenant le matériau à haute résistance (3120A) ;
former un tube anti-diffusion (312) en frittant ledit matériau composite ; et
former un rotor (310) en insérant un aimant (311) dans ledit tube anti-diffusion (312).

8. Procédé pour fabriquer une machine électrique rotative de type à aimant permanent de surface selon la revendication 7, dans lequel
ladite couche (312A) contenant ledit matériau à haute résistance (3120A) est une couche de titane.
